## Europäisches Patentamt
## European Patent Office
## Office européen des brevets

(11) Veröffentlichungsnummer: **0 246 501 B1**

(12) **EUROPÄISCHE PATENTSCHRIFT**

(45) Veröffentlichungstag der Patentschrift:
05.12.90

(51) Int. Cl.$^5$: **H01F 1/11**

(21) Anmeldenummer: 87106601.5

(22) Anmeldetag: 07.05.87

(54) Verfahren zu Herstellung kobalthaltiger nadelförmiger, magnetischer Eisenoxide.

(30) Priorität: 13.05.86 DE 3616096

(43) Veröffentlichungstag der Anmeldung:
25.11.87 Patentblatt 87/48

(45) Bekanntmachung des Hinweises auf die Patenterteilung:
05.12.90 Patentblatt 90/49

(84) Benannte Vertragsstaaten:
DE FR GB NL

(56) Entgegenhaltungen:
EP-A- 0 014 902
EP-A- 0 014 903
DE-A- 2 235 383
DE-A- 2 811 473
GB-A- 1 441 185
GB-A- 1 589 355
GB-A- 2 125 021
US-A- 3 573 980

(73) Patentinhaber: BASF Aktiengesellschaft,
Carl-Bosch-Strasse 38, D-6700 Ludwigshafen(DE)

(72) Erfinder: Schwab, Ekkehard, Dr., Maxburgstrasse 1,
D-6730 Neustadt(DE)
Erfinder: Steck, Werner, Dr., Auerstrasse 4,
D-6700 Ludwigshafen(DE)
Erfinder: Schloesser, Wilhelm, Dr.-Illert-Strasse 21,
D-6520 Worms 23(DE)
Erfinder: Feser, Rainer, Dr., Colgensteiner Weg 25,
D-6718 Gruenstadt(DE)

**Beschreibung**

Die Erfindung betrifft ein Verfahren zur Herstellung von nadelförmigem, magnetischem Eisenoxid, bestehend aus einem Kern aus Gamma-Eisen(III)Oxid und einer, bezogen auf die Gesamtmenge an magnetischem Material, insgesamt O,4 bis 12 Gew.-% Kobalt (II)- und O,1 bis 15 Gew.-% Eisen(II)ionen enthaltenden Ferrithülle.

Nadelförmiges gamma-Eisen(III)-oxid wird seit langem und in großem Umfang als magnetisierbares Material bei der Herstellung von magnetischen Aufzeichnungsträgern eingesetzt. Durch die Fortentwicklung auf dem Gebiet der Aufzeichnungstechnik entstand jedoch zunehmend Bedarf für magnetische Materialien, die sich vor allem durch eine höhere Koerzitivfeldstärke gegenüber dem gamma-Eisen(III)Oxid auszeichnen.

Es ist bekannt, daß sich die Koerzitivfeldstärke von magnetischen Eisenoxiden durch Dotierung mit Kobalt beträchtlich erhöhen läßt, jedoch zeigen solche Materialien eine Reihe von unerwünschten Eigenschaften, insbesondere thermische und mechanische Instabilität von Remanenz und Koerzitivfeldstärke, wenn die Dotierung mit Kobalt als Volumendotierung vorgenommen wird.

Eine wesentliche Verbesserung der magnetischen Eigenschaften der Pigmente ergibt sich dann, wenn die Dotierung so vorgenommen wird, daß sich das Kobalt in Form einer magnetischen Kobaltverbindung in einer äußeren Hülle auf einem im wesentlichen kobaltfreien Kern von Gamma-Fe$_2$O$_3$ oder bertholliden Eisenoxiden befindet. Für die Herstellung solcher Pigmente mit Schichtaufbau sind mehrere Verfahren beschrieben worden. Im wesentlichen handelt es sich dabei um das Aufbringen einer kobalthaltigen Verbindung auf magnetische nadelförmiges Eisenoxid und anschließendes Tempern der beschichteten Oxide, wie es beispielsweise in der GB-PS 1 441 185 oder der US-PS 3 573 98O beschrieben ist. Mit diesen Verfahren können jedoch, wenn die oben beschriebenen Nachteile einer Volumendotierung vermieden werden sollen, nur begrenzte Steigerungen der Koerzitivfeldstärke erzielt werden. Auch das Aufbringen eines Gemisches von Fe(II)- und Co-Hydroxid unter gleichzeitiger Oxidation der Beschichtung ist bekannt (DE-OS 22 35 383). Hiermit lassen sich zwar höhere Steigerungen der Koerzitivfeldstärke erzielen, jedoch sind dazu verhältnismäßig große Mengen Kobalt erforderlich, der Nutzungsgrad des Kobalts ist also gering. Des weiteren ist aus den EP-A 14 9O2 und EP-A 14 9O3 bekannt, auf das Gamma-Eisen(III)oxid ein Gemisch von Fe(II)- und Co--Hydroxid aufzubringen unter gleichzeitigem Einleiten von Inertgas, um die Oxidation des zweiwertigen Eisens zu verhindern. Mit diesem Verfahren lassen sich höhere Steigerungen der Koerzitivfeldstärke bei niedrigerem Kobaltgehalt erzielen. Allerdings werden keine besonders ausgeprägten Kern/Hüllen-Strukturen der so dargestellten Teilchen erreicht, so daß insbesondere bei höherkoerzitiven Pigmenten die im Zusammenhang mit der Volumendotierung geschilderten Nachteile wieder auftreten. Dies läßt sich darauf zurückführen, daß die für große Koerzitivfeldstärken bei diesem Verfahren erforderlichen hohen Fe-(II)-Konzentrationen die Diffusion des Kobalts ins Teilcheninnere stark beschleunigen. Aus der DE-OS 28 11 473 ist außerdem ein Verfahren bekannt, bei dem zunächst suspendiertes Gamma--Eisen(III)oxid unter Inertgasatmosphäre auf einem Eisen(II)/Kobalthydroxidgemisch beschichtet wird, welches dann bei einer Temperatur von mindestens 6O°C oxidativ weiterbehandelt wird. Auch bei diesem Verfahren ist mit einem Eindringen von Kobaltionen in den Gamma-Eisen(III)oxidkern während der Temperaturbehandlung und den damit verbundenen Nachteilen zu rechnen. Zudem ist es schwierig, mittels dieses Verfahrens reproduzierbare Produkteigenschaften zu erzielen.

Es bestand daher die Aufgabe, ein Verfahren zu finden, nach dem die Kobaltdotierung von magnetischen, nadelförmigen Eisenoxiden in einer solchen Weise vorgenommen wird, daß ein Teilchen mit ausgeprägter Kern/Hüllen-Struktur und großer Steigerung der Koerzitivfeldstärke bei Zusatz niedriger Kobaltkonzentrationen und kleinen Fe(II)-Gehalten im fertigen Pigment in gut reproduzierbarer Weise erhalten wird.

Es wurde nun gefunden, daß sich nadelförmiges, magnetisches Eisenoxid, bestehend aus einem Kern aus Gamma-Eisen(III)oxid und einer, bezogen auf die Gesamtmenge des Materials, insgesamt O,4 bis 12 Gew.-% Kobalt(II)- und O,1 bis 15 Gew.-% Eisen(II)-ionen enthaltenden Ferrithülle, in einfacher Weise mit den aufgabengemäß geforderten Eigenschaften herstellen läßt, wenn

(1) nadelförmiges magnetisches Gamma-Eisen(III)oxid in Wasser suspendiert und unter Inertgasatmosphäre bei einer Temperatur zwischen 5 und 6O°C durch Ausfällen von Eisen(II)ionen mittels Alkalian mit einem Eisen(II)hydroxidniederschlag in einer Menge von 2 bis 6 Gew.-% Eisenionen, bezogen auf das eingesetzte Gamma-Eisen(III)oxid, versehen wird, dann

(2) auf das so behandelte Gamma-Eisen(III)oxid durch Zugabe einer Eisen(II)-und Kobalt(II)ionen enthaltenden Lösung zur Suspension mittels Alkalien unter Inertgas bei einer Temperatur zwischen 5 und 6O°C, vorzugsweise zwischen 2O und 95°C, ein Eisen(II)- und Kobalt hydroxid-Niederschlag aufgefällt wird, der

(3) durch Einleiten eines gasförmigen oxidierenden Mediums in die Suspension bei einer Temperatur zwischen 5 und 35°C und

(4) anschließend bei einer Temperatur der Suspension zwischen 35 und 95°C unter Inertgasatmosphäre innerhalb von 1 bis 5 Stunden zur ferritischen Hülle umgewandelt wird.

In einer vorzugsweisen Ausführungsform des erfindungsgemäßen Verfahrens werden die Hydroxid-Ausfällungen bei einem pH-Wert von größer 12 durchgeführt.

Das nach dem erfindungsgemäßen Verfahren hergestellte Material läßt sich ohne Nachteile nach dem Abfiltrieren, Waschen und Trocknen unter Inertgasatmosphäre bei Temperaturen zwischen 100 und 150°C noch 1 bis 5, vorzugsweise 1 bis 2 Stunden lang tempern.

Bei der Durchführung des erfindungsgemäßen Verfahrens werden die an sich bekannten Ausgangsmaterialien eingesetzt und in der beschriebenen Weise vorgegangen.

Die Suspendierung in Wasser geschieht üblicherweise mit einem Dispergiergerät, welches nach dem Rotor/Stator-Prinzip arbeitet.

Die wäßrigen Eisen(II)- und Kobalt-Lösungen werden vorzugsweise aus den entsprechenden Sulfaten oder Chloriden hergestellt, während zur Ausfällung der Hydroxide im allgemeinen Natriumhydroxid verwendet wird. Die Inertgasatmosphäre wird durch Abdecken der Reaktionsgefäße mit einem Stickstoffstrom bzw. Einleiten von Stickstoff bewerkstelligt, und die Oxidation erfolgt mittels Durchleiten von oxidierenden Gasen, üblicherweise Luft, durch die Suspension.

Die Kobaltverteilung in den entsprechenden magnetischen Materialien läßt sich u.a. nach einer von M. Kishimoto et. al., in J. Magn. Mat. 31-34 (1983) 943 beschriebenen Methode ermitteln. Dabei wird das Pigment mit zunehmend konzentrierten Säuren für eine bestimmte Zeitdauer behandelt, um so wachsende Anteile der Teilchen abzulösen. Der jeweils zurückbleibende Pigmentanteil wird einer chemischen Analyse unterworfen. Aus diesen Analysendaten lassen sich nach folgender Gleichung Konzentrationstiefenprofile für die einzelnen Elemente errechnen:

$$\% \; X = \frac{(\text{Menge } X)_n \quad - \; (\text{Menge } X)_{n+1}}{(\text{Verlust})_{n+1} \; - \; (\text{Verlust})_n} \times 100,$$

wobei der Verlust den Gesamtverlust an abgelöstem Pigment und die Menge X die im Rückstand noch enthaltene Masse des Elements X bedeuten.

Für die im folgenden beschrieben Beispiele und Vergleichsversuche wurde ein Gamma-$Fe_2O_3$-Pig-ment mit folgenden Kenngrößen verwendet:

$H_c(\rho=1,2)$:         24,5 kA/m
$Mr/\rho$:         39,5 nTm$^3$/g
$SN_2$:         46,8 m$^2$/g

Die magnetischen Werte der Materialien wurden in einem Schwingmagnetometer bei einer Feldstärke von 160 kA/m gemessen, und zwar die Koerzitivfeldstärke $H_c$ in [kA/m], umgerechnet auf eine Stopf-dichte von $\rho$= 1,2 mg/mm$^3$ ($H_{c\,\rho}$ = 1,2), die spezifische Remanenz $Mr/\rho$ in [nTm$^3$/g] und die spezifische Sät-tigungsmagnetisierung $M_m/\rho$ in [nTm$^3$/g] bzw. bei einem Meßfeld von 800 kA/m als $M_S/\rho$ in [nTm$^3$/g].

Beispiel 1

25 g $\gamma$-$Fe_2O_3$ wurden in 100 ml Wasser eindispergiert. Zu der erhaltenen Dispersion wurden 4,98 g $FeSO_4 . 7H_2O$, gelöst in 20 ml Wasser gegeben und die Mischung unter weiterem Dispergieren und Einleiten von Stickstoff auf 50°C aufgeheizt. Nach Erreichen von 50°C wurde die Dispersion durch Zugabe von 5n-NaOH auf einen pH-Wert von 12 gestellt und eine Stunde bei dieser Temperatur nachgerührt. Anschließend wurde auf eine Temperatur von 20°C abgekühlt.

Zu der abgekühlten Dispersion wurden nacheinander 9,95 g $FeSO_4 . 7H_2O$ und 4,77 g $CoSO_4 . 7H_2O$, jeweils gelöst in Wasser, gegeben. Anschließend wurde die Dispersion mit 10 n-NaOH auf einen pH-Wert von über 14 eingestellt. Nach der dadurch bewirkten Ausfällung von $Fe(OH)_2$ und $Co(OH)_2$ wurde von Stickstoff- auf Luftbegasung umgestellt und der Niederschlag eine Stunde bei einer Temperatur von 25°C oxidiert.

Danach wurde unter Stickstoffbegasung zwei Stunden bei 95°C nachgerührt und der oxidierte Hydroxidniederschlag zu Kobaltferrit umgesetzt. Die Suspension wurde filtriert, das Produkt alkalifrei gewaschen und bei einer Temperatur von unter 100°C getrocknet. Folgende Daten wurden am Pigment ge-messen.

Koerzitivfeldstärke $H_c(\rho=1,2)$:         47,5 kA/m
spez. Remanenzmagnetisierung $Mr/\rho$:         40,1 nTm$^3$/g
relative Remanenz $M_r/M_m$:         0,56
relative Remanenz $M_r/M_s$:         0,47
Fe(II)-Gehalt:         2,9 Gew.-%
Co-Gehalt:         3,3 Gew.-%

Beispiel 2

Es wurde wie im Beispiel 1 beschrieben verfahren, mit dem Unterschied, daß die Dispersion bereits nach Zugabe der ersten Eisen(II)salzlösung mit 10n-NaOH auf einen pH-Wert von über 14 eingestellt wurde. Es wurde ein Pigment mit folgenden Daten erhalten.

| | |
|---|---|
| Koerzitivfeldstärke $H_c(\rho=1,2)$ : | 53,4 kA/m |
| spez. Remanenzmagnetisierung $M_r/\rho$ : | 42,7 nTm³/g |
| relative Remanenz $M_r/M_m$ : | 0,56 |
| relative Remanenz $M_r/M_s$ : | 0,47 |
| Fe(II)-Gehalt : | 2,6 Gew.-% |
| Co-Gehalt : | 3,3 Gew.-% |

Vergleichsversuch 1

25 g Gamma-$Fe_2O_3$ wurden in 100 ml Wasser dispergiert. Dazu wurden zuerst 4,77 g $CoSO4 . 7H_2O$ und anschließend 14,93 g $FeSO_4 . 7H_2O$, jeweils gelöst in 20 ml Wasser, gegeben. Danach wurde 15 Minuten zur Homogenisierung nachgerührt. Die Mischung wurde auf 50°C aufgeheizt und nach Erreichen dieser Temperatur mit 5 n-NaOH versetzt, um einen pH-Wert von 12 einzustellen. Anschließend wurde noch 4 Stunden bei dieser Temperatur nachgerührt. Während der gesamten Reaktionszeit wurde in die Suspension Stickstoff eingeblasen, um eine Oxidation des eingesetzten Fe(II) zu verhindern.

Die Suspension wurde filtriert, das Produkt alkalifrei gewaschen und bei einer Temperatur von unter 100°C getrocknet. Es wurden folgende Daten am Pigment gemessen:

| | |
|---|---|
| Koerzitivfeldstärke $H_c(\rho=1,2)$ : | 54,8 kA/m |
| spez. Remanenzmagnetisierung Mr/$\rho$ : | 47,3 nTm³/g |
| relative Remanenz $M_r/M_m$ : | 0,58 |
| relative Remanenz $M_r/M_s$ : | 0,49 |
| Fe(II)-Gehalt : | 7,9 Gew.-% |
| Co-Gehalt : | 3,5 Gew.-% |

Vergleichsversuch 2

Es wurde wie im Vergleichsversuch 1 verfahren, jedoch wurde das erhaltene Pigment einer oxidativen Nachbehandlung unterworfen, indem es für 60 Minuten bei 200°C in einer Stickstoff/Sauerstoff-Atmosphäre mit 160 ppm Sauerstoff-Anteil nachgetempert wurde. Danach wurden folgende Daten gemessen:

| | |
|---|---|
| Koerzitivfeldstärke $H_c(\rho=1,2)$ : | 48,8 kA/m |
| spez. Remanenzmagnetisierung Mr/$\rho$ : | 44,1 nTm³/g |
| relative Remanenz $M_r/M_m$ : | 0,57 |
| relative Remanenz $M_r/M_s$ : | 0,50 |
| Fe(II)-Gehalt : | 4,6 Gew.-% |
| Co-Gehalt : | 3,5 Gew.-% |

Vergleichsversuch 3

25 g Gamma-$Fe_2O_3$ wurden in 100 ml Wasser dispergiert, dazu wurden 19,2 g $FeSO_4 . 7H_2O$ und 9,36 g $CoSO_4 . 7H_2O$, gelöst in 40 ml Wasser gegeben, anschließend wurden 10 g NaOH, gelöst in 20 ml Wasser zugesetzt. Unter Einleiten von Stickstoff wurde die erhaltene Gamma-$Fe_2O_3$/Metallhydroxid-Suspension auf 80°C aufgeheizt, nach Erreichen dieser Temperatur wurde auf Luft umgeschaltet und drei Stunden nachgerührt.

Das erhaltene Produkt wurde filtriert, alkalifrei gewaschen und unter Stickstoff getrocknet. Folgende Daten wurden gemessen:

| | |
|---|---|
| Koerzitivfeldstärke $H_c(\rho=1,2)$ : | 55,0 kA/m |
| spez. Remanenzmagnetisierung Mr/$\rho$ : | 42,9 nTm³/g |
| relative Remanenz $M_r/M_m$ : | 0,56 |
| relative Remanenz $M_r/M_s$ : | 0,50 |
| Fe(II)-Gehalt : | 2,7 Gew.-% |
| Co-Gehalt : | 6,1 Gew.-% |

4

Vergleichsversuch 4

Es wurde wie im Vergleichsversuch 3 beschrieben verfahren, mit dem Unterschied, daß lediglich 4,77 g CoSO₄ und 14,93 g FeSO₄ . 7 H₂O eingesetzt wurden, die durch Zugabe von 8 g NaOH, gelöst in 2O ml Wasser, als Hydroxide ausgefällt wurden.

Es wurde ein Pigment mit folgenden Daten erhalten:

| | |
|---|---|
| Koerzitivfeldstärke $H_C(\rho=1,2)$ : | 47,1 kA/m |
| spez. Remanenzmagnetisierung $Mr/\rho$ : | 44,2 nTm³/g |
| relative Remanenz $M_r/M_m$ : | 0,55 |
| relative Remanenz $M_r/M_s$ : | 0,47 |
| Fe(II)-Gehalt : | 3,2 Gew.-% |
| Co-Gehalt : | 3,2 Gew.-% |

## Patentansprüche

1. Verfahren zur Herstellung von nadalförmigem, magnetischem Eisenoxid, bestehend aus einem Kern aus Gamma-Eisen(III)oxid und einer, bezogen auf die Gesamtmenge des Materials, insgesamt O,4 bis 12 Gew.-% Kobalt(II)- und O,1 bis 15 Gew.-% Eisen(II)ionen enthaltenden Ferrithülle, dadurch gekennzeichnet, daß

(1) nadelförmiges magnetisches Gamma-Eisen(III)oxid inWasser suspendiert und unter Inertgasatmosphäre bei einer Temperatur zwischen 5 und 6O°C durch Ausfällen von Eisen(II)ionen mittels Alkalien mit einem Eisen(II)hydroxidniederschlag in einer Menge von 2 bis 6 Gew.-% Eisenionen, bezogen auf das eingesetzte Gamma-Eisen(III)oxid, versehen wird, dann

(2) auf das so behandelte Gamma-Eisen(III)oxid durch Zugabe einer Eisen(II)- und Kobalt(II)ionen enthaltenden Lösung zur Suspension mittels Alkalien unter Inertgas bei einer Temperatur zwischen 5 und 6O°C ein Eisen(II)- und Kobalthydroxid-Niederschlag aufgefällt wird, der

(3) durch Einleiten eines gasförmigen oxidierenden Mediums in die Suspension bei einer Temperatur zwischen 5 und 35°C oxidiert und

(4) anschließend bei einer Temperatur der Suspension zwischen 35 und 95°C unter Inertgasatmosphäre innerhalb von 1 bis 5 Stunden zur ferritischen Hülle umgewandelt wird.

2. Verfahren gemäß Anspruch 1, dadurch gekennzeichnet, daß das Ausfällen des Eisen(II)hydroxids in der ersten Verfahrensstufe bei einem pH-Wert von größer 12 durchgeführt wird.

3. Verfahren gemäß Anspruch 1 oder 2, dadurch gekennzeichnet, daß das Ausfällen des Eisen(II)- und Kobalthydroxids in der zweiten Verfahrensstufe bei einem pH-Wert von größer 14 durchgeführt wird.

4. Verfahren gemäß Anspruch 1, dadurch gekennzeichnet, daß das Endprodukt nach der Trocknung einer Temperung unter Inertgasatmosphäre für 1 bis 5 Stunden bei einer Temperatur zwischen 1OO und 15O°C unterzogen wird.

## Claims

1. A process for the preparation of acicular, magnetic iron oxide consisting of a core of gamma-iron(III) oxide and a ferrite shell containing a total of from 0.4 to 12% by weight of cobalt (II) ions and from 0.1 to 15% by weight of iron(II) ions, the percentages being based on the total amount of the material, wherein

(1) acicular magnetic gamma-iron(III) oxide is suspended in water and, under an inert gas atmosphere at from 5 to 60°C, is provided with an iron(II) hydroxide precipitate in an amount corresponding to from 2 to 6% by weight, based on the gamma-iron(III) oxide used, of iron ions by precipitating iron(II) ions by means of an alkali,

(2) an iron(II) hydroxide/cobalt hydroxide precipitate is precipitated onto the gamma-iron(III) oxide treated in this manner, by the addition of a solution containing iron(II) and cobalt(II) ions to the suspension and by means of an alkali, under inert gas at from 5 to 60°C, and

(3) the said precipitate is oxidized by passing a gaseous oxidizing medium into the suspension at from 5 to 35°C and then

(4) converted to the ferrite shell at a suspension temperature of from 35 to 95°C under an inert gas atmosphere in the course of from 1 to 5 hours.

2. A process as claimed in claim 1, wherein precipitation of the iron(II) hydroxide in the first stage of the process is carried out at a pH higher than 12.

3. A process as claimed in claim 1 or 2, wherein precipitation of the iron(II) and cobalt hydroxide in the second stage of the process is carried out at a pH higher than 14.

4. A process as claimed in claim 1, wherein the end product, after it has been dried, is heated at from 100 to 150°C for from 1 to 5 hours under an inert gas atmosphere.

**Revendications**

1. Procédé de préparation d'oxyde de fer magnétique, aciculaire, constitué d'un noyau en oxyde de fer (III)-gamma et d'une enveloppe de ferrite contenant, rapportés à la quantité totale du matériau, au total 0,4 à 12% en poids d'ions cobalt (II) et 0,1 à 15% en poids d'ions fers (II), caractérisé par le fait que:

(1) on suspend dans l'eau de l'oxyde de fer (III)-gamma magnétique, aciculaire et, sous atmosphère de gaz inerte, à une température comprise entre 5 et 50 degrés C, par précipitation d'ions fer (II), au moyen d'alcalis, on le dote d'un dépôt d'hydroxyde de fer (II) en une quantité de 2 à 6% en poids d'ions fer, rapportée à l'oxyde de fer (III)-gamma utilisé, puis,

(2) sur l'oxyde de fer (III)-gamma ainsi traité, par addition à la suspension d'une solution contenant des ions fer (II) et cobalt (II), au moyen d'alcalis, sous gaz inerte, à une température comprise entre 5 et 60 degrés C, on précipite un dépôt d'hydroxyde de fer (II) et de cobalt, que

(3) par amené d'un fluide oxydant gazeux dans la suspension, on oxyde, à une température comprise entre 5 et 35 degrés C, et que

(4) à une température de la suspension comprise entre 35 et 95 degrés C, sous atmosphère de gaz inerte, on transforme ensuite, en 1 à 5 heures, en enveloppe ferritique.

2. Procédé selon la revendication 1, caractérisé par le fait qu'on opère la précipitation de l'hydroxyde de fer (II), dans la première étape du procédé, à une valeur du pH supérieure à 12.

3. Procédé selon la revendication 1 ou 2, caractérisé par le fait qu'on opère la précipitation de l'hydroxyde de fer (II) et du cobalt, dans la deuxième étape du procédé à une valeur du pH supérieure à 14.

4. Procédé selon la revendication 1, caractérisé par le fait qu'on soumet le produit final, après le séchage, à un traitement thermique, sous atmosphère de gaz inerte, pendant 1 à 5 heures, à une température comprise entre 100 et 150 degrés C.